# EUROPEAN PATENT SPECIFICATION

(11) **EP 1 783 171 B1**
(45) Date of publication and mention of the grant of the patent: **26.08.2009**
(21) Application number: 05766459.1
(22) Date of filing: 14.07.2005
(51) Int. Cl.: C08L 67/02, C08G 63/84, C08K 5/49, D01F 6/62, D01F 6/92

(54) **POLYTRIMETHYLENE TEREPHTHALATE**
POLYTRIMETHYLENTEREPHTHALAT
TÉRÉPHTALATE DE POLYTRIMÉTHYLÈNE

(30) Priority: 20.07.2004 JP 2004211051; 29.07.2004 JP 2004221476
(43) Date of publication of application: 09.05.2007
(73) Proprietor: Solotex Corporation, Osaka-shi Osaka 530-0004 (JP)
(72) Inventor: TSUKAMOTO, R., Matsuyama Fact., Teijin Fibers Ltd, 77, Kitayoshida-cho (JP); HASHIMOTO, N., Matsuyama Fact., Teijin Fibers Ltd, Matsuyama-shi, Ehime 791-8041 (JP); HOSHI, Toyohiko c/o Solotex Corporation, Osaka-shi, Osaka 530-0004 (JP)
(74) Representative: Hallybone, Huw George
(86) International application number: PCT/JP2005/013435
(87) International publication number: WO 2006/009232

(56) References cited:
- EP-A1- 1 426 395
- US-A1- 2001 003 618

## Description

### Field of the Invention

The present invention relates to polytrimethylene terephthalate and a fiber made from the same. More specifically, it relates to polytrimethylene terephthalate which hardly produces a cyclic dimer when it is melt molded and a fiber made from the same.

### Description of the Prior Art

Polyester fibers, films and other molded products are widely used because polyesters have excellent mechanical, physical and chemical properties. A polytrimethylene terephthalate fiber is now attracting attention as it has a soft feel which is not attained by a polyethylene terephthalate fiber, excellent elastic recovery and high dyeability.

However, this polytrimethylene terephthalate readily produces a cyclic dimer upon polycondensation. This cyclic dimer adheres to a spinneret and therearound as foreign matter in the spinning step and may cause end breakage. The cyclic dimer may separate out at the time of processing such as weaving or knitting to reduce processing stability. To solve this problem, there is proposed polytrimethylene terephthalate having a content of a component having a low degree of polymerization of 1 wt% or less, which is prepared by the solid-phase polymerization of polytrimethylene terephthalate under reduced pressure (refer to Patent Document 1). Although the amount of the cyclic dimer contained in a polytrimethylene terephthalate chip can be reduced by using this method, when it is re-molten to be molded, the cyclic dimer is reproduced. Therefore, it does not improve the above problem fundamentally.

Meanwhile, there is proposed a method of suppressing the precipitation of the cyclic dimer by reducing the activity of a catalyst with a phosphoric acid-based compound (refer to Patent Document 2). However, it is desired that the content of the cyclic dimer and the amount of the produced cyclic dimer should be further reduced.
(Patent Document 1) JP-A 8-311177 (the term "JP-A" as used herein means an "unexamined published Japanese patent application")
(Patent Document 2) JP-A 2004-51921

### Summary of the Invention

It is an object of the present invention to provide polytrimethylene terephthalate which has a low content of a cyclic dimer and hardly produces the cyclic dimer when it is melt molded.

It is another object of the present invention to provide polytrimethylene terephthalate which rarely causes end breakage as the cyclic dimer does not adhere to a spinneret and therearound at the time of melt spinning, thereby making possible stable spinning.

It is still another object of the present invention to provide polytrimethylene terephthalate which enables the stable production of woven and knitted fabrics and dyed yarns as the amount of the precipitated cyclic dimer is small at the time of weaving, knitting and dyeing.

It is a further object of the present invention to provide polytrimethylene terephthalate which hardly yellows when it is melt molded.

It is a still further object of the present invention to provide a method of manufacturing the polytrimethylene terephthalate and a fiber obtained from the polytrimethylene terephthalate.

EP-A-1 426 395 describes a polyester based on poly(trimethylene terephthalate), which has an intrinsic viscosity of 0.75 and a cyclic dimer content of 1.9 to 2.1 wt %, and methods for producing the polyester by transesterifying an ester forming derivative of terephthalic acid with trimethylene glycol and polymerizing the obtaining product or by directly esterifying terephthalic acid with trimethylene glycol.

Firstly, the above objects of the present invention can be attained by polytrimethylene terephthalate (A) which is essentially composed of a trimethylene terephthalate unit, has an intrinsic viscosity of 0.5 to 1.6 dl/g and contains 0.01 to 0.5 wt% of a compound represented by the following formula (I) : 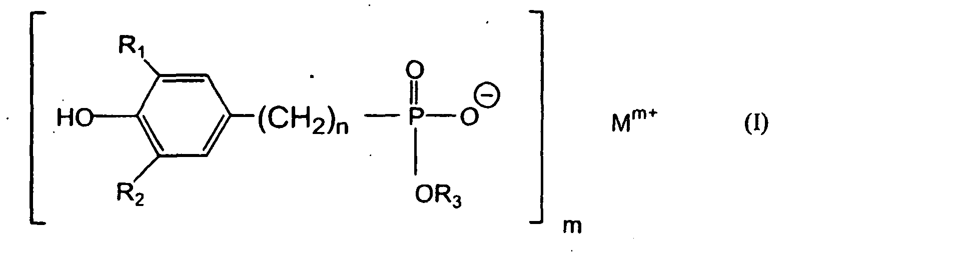 (R₁, R₂ and R₃ are the same or different hydrocarbon groups having 1 to 10 carbon atoms, n is an integer of 1 to 5, M is an alkali metal atom or alkali earth metal atom, and m is 1 when M is an alkali metal atom and 2 when M is an alkali earth metal atom),

Secondly, the above objects of the present invention can be attained by a fiber made from the polytrimethylene terephthalate (A).

Thirdly, the above objects of the present invention can be attained by polytrimethylene terephthalate (B) which is essentially composed of a trimethylene terephthalate unit as a recurring unit, has an intrinsic viscosity of 0.5 to 1.6 dl/g and contains more than 0.5 wt% and 30 wt% or less of a compound represented by the above formula (I).

In the fourth place, the above objects of the present invention can be attained by a method of manufacturing the polytrimethylene terephthalate (A) by esterifying terephthalic acid with trimethylene glycol or transesterifying an ester forming derivative of terephthalic acid with trimethylene glycol and polymerizing the obtained product, wherein a compound represented by the formula (I) is added in an amount of 0.01 to 0.5 wt% based on the polytrimethylene terephthalate after the intrinsic viscosity of the polymethylene terephthalate becomes 0.4 dl/g or more.

Further, the present invention includes a method of manufacturing the polytrimethylene terephthalate (A), comprising the step of melt kneading 100 parts by weight of polytrimethylene terephthalate (C) essentially composed of a trimethylene terephthalate unit and having an intrinsic viscosity of 0.5 to 1.6 dl/g with 0.5 to 20 parts by weight of the polytrimethylene terephthalate (B).

### Effect of the Invention

According to the present invention, there is provided polytrimethylene terephthalate which has a low content of a cyclic dimer and hardly produces the cyclic dimer when it is melt molded.

The polytrimethylene terephthalate rarely causes end breakage as the cyclic dimer does not adhere to a spinneret and therearound at the time of melt spinning, thereby making possible stable spinning.

The polytrimethylene terephthalate enables the stable production of woven and knitted fabrics as the amount of the precipitated cyclic dimer is small at the time of weaving and knitting.

The polytrimethylene terephthalate enables the manufacture of dyed yarn having stable quality as the amount of the precipitated cyclic dimer is small at the time of dyeing.

The polytrimethylene terephthalate hardly yellows when it is melt molded and has excellent color.

### Best Mode For the Embodiment of the Invention

The present invention will be described in detail hereinunder.

### <polytrimethylene terephthalate (A)>

The polytrimethylene terephthalate (A) of the present invention (may be abbreviated as PTT(A) hereinafter) is a polyester essentially composed of a trimethylene terephthalate unit represented by the following formula.

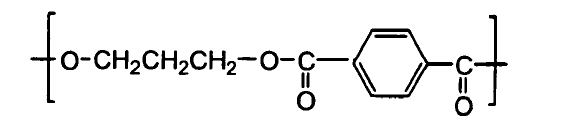

The word "essentially" as used herein means that this recurring unit accounts for 90 mol% or more of the total of all the recurring units. Preferably, the trimethylene terephthalate accounts for 95 to 100 mol% of the total of all the recurring units.

PTT(A) may comprise a third component constituting a recurring unit other than the trimethylene terephthalate unit. The third component may be a dicarboxylic acid component or a glycol component. Examples of the dicarboxylic acid component include aromatic dicarboxylic acids such as 2, 6-naphthalenedicarboxylic acid, isophthalic acid and phthalic acid, aliphatic dicarboxylic acids such as adipic acid, azelaic acid, sebacic acid and decanedicarboxylic acid, and alicyclic dicarboxylic acids such as cyclohexanedicarboxylic acid. Examples of the glycol component include ethylene glycol, tetramethylene glycol, diethylene glycol, polyethylene glycol, hexamethylene glycol, cyclohexanedimethanol and 2,2-bis[4-(2-hydroxyethoxy)phenyl]propane. They may be used alone or in combination of two or more. The recurring unit composed of the third component accounts for preferably 0 to 10 mol%, more preferably 0 to 5 mol% of the total of all the recurring units.

### (intrinsic viscosity)

PTT(A) has an intrinsic viscosity of 0.5 to 1.6 dl/g. This intrinsic viscosity is a value measured in o-chlorophenol at 35°C. When the intrinsic viscosity is lower than 0.5 dl/g, the mechanical strength of the finally obtained fiber becomes unsatisfactory and when the intrinsic viscosity is higher than 1.6 dl/g, the handling ease of the fiber deteriorates disadvantageously. The intrinsic viscosity is preferably 0.55 to 1.45 dl/g, more preferably 0.6 to 1.4 dl/g.

To set the intrinsic viscosity of PTT (A) to the above range, solid-state polymerization is preferably carried out.
The solid-state polymerization may be carried out by maintaining a pellet of polytrimethylene terephthalate at a high temperature lower than the melting point thereof, preferably 190 to 210°, and stirring or leaving it to stand under a high vacuum of 150 Pa or less or in a nitrogen stream for several hours to several tens of hours. This solid-state polymerization may be carried out in a continuous or batch manner.

### (compound represented by the formula (I))

The PTT(A) of the present invention contains a phosphonic acid salt represented by the following formula (I) in an amount of 0.01 to 0.5 wt%. When the amount of the compound represented by the following formula (I) is smaller than 0.01 wt%, the amount of the reproduced cyclic dimer becomes large disadvantageously.
When the amount is larger than 0.5 wt%, the heat resistance of polytrimethylene terephthalate may lower. The amount of the compound represented by the following formula (I) is preferably 0.03 to 0.3 wt%.

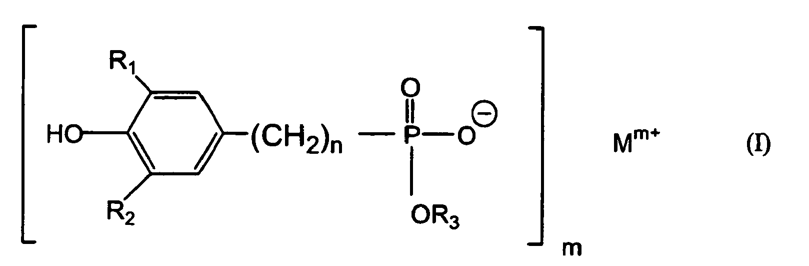

In the formula (I), R₁, R₂ and R₃ are the same or different hydrocarbon groups having 1 to 10 carbon atoms. The hydrocarbon group having 1 to 10 carbon atoms is an alkyl group having 1 to 10 carbon atoms or aromatic group having 6 to 10 carbon atoms. Examples of the alkyl group having 1 to 10 carbon atoms include methyl group, ethyl group, propyl group, isopropyl group, butyl group and tertiary-butyl group. Examples of the aromatic group having 6 to 10 carbon atoms include phenyl group and benzyl group. Out of these, methyl group, ethyl group, isopropyl group and tertiary-butyl group are preferred.

n is an integer of 1 to 5, preferably 1 or 2.

M is an alkali metal atom or alkali earth metal atom. When M is an alkali metal atom, m is 1 and when M is an alkali earth metal atom, m is 2. Examples of the alkali metal atom include potassium and sodium. Examples of the alkali earth metal atom include calcium, magnesium, strontium and barium.
Out of these, calcium is preferred.

Examples of the compound represented by the formula (I) include calcium diethylbis(((3,5-dimethyl-4-hydroxyphenyl)methyl)phosphonate), magnesium
diethylbis(((3,5-dimethyl-4-hydroxyphenyl)methyl)phosphonate), calcium
diethylbis(((3,5-bis(1,1-dimethylethyl)-4-hydroxyphenyl)methyl)phosphonate), magnesium
diethylbis(((3,5-bis(1,1-dimethylethyl)-4-hydroxyphenyl)methyl)phosphonate), calcium
diethylbis(((3,5-bis(1,1-dimethylethyl)-4-hydroxyphenyl)ethyl)phosphonate) and magnesium diethylbis(((3,5-bis(1,1-dimethylethyl)-4-hydroxyphenyl)ethyl)phosphonate).

The content of the compound represented by the above formula (I) in PTT(A) can be determined by the determination analysis of the alkali metal element, alkali earth metal element and phosphorus element or by the nuclear magnetic resonance spectrum of PTT(A).

### (content of cyclic dimer)

The PTT(A) of the present invention has a content of a cyclic dimer represented by the following formula (1) of preferably 0.01 to 2 wt%. When the content of the cyclic dimer falls within the above range, the yarn making properties of PTT(A) become satisfactory. The content of the cyclic dimer is more preferably 0.02 to 2 wt%, most preferably 0.03 to 1.5 wt%. To set the content of the cyclic dimer to 0.01 to 2 wt%, it is effective that solid-state polymerization should be carried out after melt polymerization until its intrinsic viscosity becomes 0.5 to 1.0 dl/g.

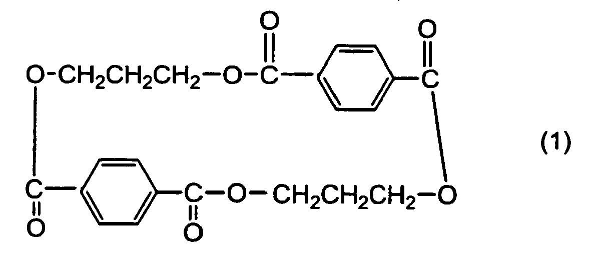

### (reproduced cyclic dimer forming rate)

PTT(A) has a reproduced cyclic dimer forming rate at 260°C under a nitrogen atmosphere of preferably 0.01 wt%/min or less, more preferably 0.001 to 0.01 wt%/min. It is most preferably 0.001 to 0.009 wt%/min.

The term "reproduced cyclic dimer" as used herein means a cyclic dimer represented by the formula (1) which is reproduced as a thermodynamically stable compound by cutting some of the ester bonds of a polyester linearly linked by recurring units. The term "reproduced cyclic dimer forming rate" means an increase in the content (wt%) of the cyclic dimer represented by the formula (1) in PTT(A) per minute. When the reproduced cyclic dimer forming rate is high, the amount of the reproduced cyclic dimer at the time of melt spinning becomes large, whereby the spinning step and the subsequent weaving and knitting steps may become unstable. In order to set the cyclic dimer forming rate to the above range, it is effective that the compound represented by the above formula (I) should be contained in PTT(A) in the above range.

### (color b' value)

PTT(A) preferably has a color b' value in the L'a'b' color specification system after 2 hours of a heat treatment at 140°C of 2 or less. When PTT(A) having a large color b' value is molded, the obtained molded product has a poor appearance. The color b' value is more preferably -5 to 1, most preferably -3 to 0.5.

In order to set the color b' value to 2 or less, it is effective that PTT (A) should have a cobalt element content of 1 to 100 ppm and a phosphorus element content of 10 to 1,000 ppm. To set the color b' value to 2 or less, it is more effective that the compound represented by the above formula (I) should be contained in PTT (A) in the above range. It is much more effective that a cobalt compound should be contained.

### (cobalt element content)

PTT(A) has a cobalt element content of preferably 1 to 100 ppm. The cobalt element content is more preferably 3 to 80 ppm, most preferably 5 to 50 ppm. The cobalt element contained in PTT(A) is derived from a cobalt compound. Examples of the cobalt compound include cobalt acetate ad cobalt chloride.

### (phosphorus element content)

PTT (A) has a phosphorus element content of preferably 10 to 1,000 ppm. The phosphorus element content is more preferably 15 to 700 ppm, most preferably 20 to 500 ppm. When the phosphorus element content is lower than 10 ppm, the content of the cyclic dimer, the reproduced cyclic dimer forming rate and hue may become unsatisfactory as described above. When the phosphorus element content is higher than 1,000 ppm, the heat resistance of PTT(A) may lower disadvantageously.

### (content of dipropylene glycol)

PTT(A) has a dipropylene glycol content of preferably 0.1 to 2.0 wt%. When the dipropylene glycol content falls within the above range, the heat resistance of PTT(A) and the mechanical strength of the finally obtained fiber become high. The dipropylene glycol content is more preferably 0.15 to 1.8 wt%, most preferably 0.2 to 1.5 wt%. To set the dipropylene glycol content of PTT(A) to 0.1 to 2.0 wt%, it is effective that the ratio of trimethylene glycol to terephthalic acid or dimethyl terephthalate as raw materials should be 1.2 to 2.2.

It is preferred that PTT(A) should satisfy the following requirements (a) to (d) at the same time.
(a) intrinsic viscosity of 0.5 to 1.6 dl/g
(b) dipropylene glycol content of 0.1 to 2.0 wt%
(c) cyclic dimer content of 0.01 to 2 wt%
(d) color b' value after crystallization by 2 hours of a heat treatment at 140°C of -5 to 1

### <manufacture of PTT(A), amount of titanium metal element>

PTT (A) can be manufactured by esterifying terephthalic acid directly with trimethylene glycol, polymerizing the esterified product and adding the compound represented by the above formula (I). It may also be manufactured by transesterifying an ester forming derivative of terephthalic acid such as dimethyl terephthalate with trimethylene glycol, polymerizing the transesterified product and adding the compound represented by the above formula (I). The ester forming derivative is a lower dialkyl ester, lower diaryl ester or acid halide. Specific examples of the derivative include dimethyl esters, diethyl esters, dibutyl esters, diphenyl esters, acid chlorides and acid bromides. Out of these, dimethyl esters are preferably used.

For polymerization, a titanium compound is preferably used as a polymerization catalyst to reduce the amount of foreign matter derived from the catalyst. The titanium compound is preferably an organic titanium compound soluble in a polymer. The titanium compound is preferably contained in an amount of 2 to 150 mmol% in terms of the titanium metal element contained in the residual catalyst based on the total of all the dicarboxylic acid components contained as the constituent elements of polytrimethylene terephthalate from the viewpoints of polycondensation reactivity and the hue and heat resistance of the obtained polyester. The amount of the titanium metal element is more preferably 10 to 100 mmol%, most preferably 20 to 50 mmol%. When the amount is smaller than 2 mmol%, the polycondensation reaction may not fully proceed. When the amount is larger than 150 mmol%, the obtained product may become yellowish. The titanium compound used as the polymerization catalyst is limited to an organic titanium compound soluble in a polyester and to the titanium metal element derived from an organic titanium compound contained as an impurity in titanium oxide used as a delustering agent. The titanium metal element derived from an inorganic titanium compound which is insoluble in a polyester and used as a delustering agent is not included. Examples of the titanium compound include titanium acetate and alkoxy titaniums such as tetra-n-butoxy titanium. Reaction products obtained by reacting these titanium compounds with an aromatic polycarboxylic acid or anhydride thereof may also be used. All the dicarboxylic acid components include not only terephthalic acid but also dicarboxylic acid copolymerized as the third component.

When polymerization is carried out after the ester forming derivative of terephthalic acid is transesterified with trimethylene glycol, a catalyst which is generally used as a transesterifying catalyst for polyesters, such as a calcium compound, magnesium compound, manganese compound or zinc compound may be used as a transesterifying catalyst. However, the above titanium compound is preferably used as a transesterifying catalyst and polymerization catalyst.

The compound represented by the above formula (I) may be added to polytrimethylene terephthalate by a desired method. For example, it may be added after polytrimethylene terephthalate achieves a predetermined viscosity in the polymerization step. Alternatively, it may be melt blended with the manufactured polytrimethylene terephthalate by a double-screw extruder. Melt blending may be carried out in a master batch system. The compound represented by the formula (I) can be added to polytrimethylene terephthalate while it is powdery, or dissolved or dispersed in a solvent.

Therefore, PTT(A) can be manufactured by adding the compound represented by the above formula (I) in an amount of 0.01 to 0.5 wt% based on the polytrimethylene terephthalate in the method of manufacturing polytrimethylene terephthalate by esterifying terephthalic acid with trimethylene glycol or transesterifying an ester forming derivative of terephthalic acid with trimethylene glycol and polymerizing the obtained product.

The compound represented by the formula (I) is added after the intrinsic viscosity of polytrimethylene terephthalate becomes 0.4 dl/g or more, preferably 0.5 dl/g to 1.6 dl/g.

PTT(A) is preferably in the form of a chip as heavy as 10 to 40 mg. When PTT(A) is in this form, the solid-state polymerization rate becomes sufficiently high, and PTT(A) can be fed to a melt kneading apparatus smoothly and can be handled easily at the time of transport. The shape of the chip may be columnar, square pole-like or spherical.

### <polytrimethylene terephthalate (B)>

The scope of the present invention includes polytrimethylene terephthalate (B) (may be abbreviated as PTT(B) hereinafter). PTT(B) can be used as a master chip for manufacturing PTT(A).

PTT(B) is essentially composed of a trimethylene terephthalate unit, has an intrinsic viscosity of 0.5 to 1.6 dl/g and contains more than 0.5 wt% and 30 wt% or less of the compound represented by the formula (I).

The composition of PTT (B) is identical to that of PTT (A) except that the content of the compound represented by the formula (I) in PTT(B) is higher than that of PTT(A) . The content of the compound represented by the formula (I) in PTT(B) is preferably 1 to 20 wt%.

The shape of PTT(B) is preferably the same as that of PTT(A). When PTT(B) has the same shape, it can be fed to a melt kneading apparatus smoothly and can be easily handled at the time of transport. PTT (B) can be manufactured by the same method as PTT (A) except that the amount of the compound represented by the formula (I) added is different from that of PTT(A).

### <master batch system>

PTT (A) can be manufactured from PTT (B) by a so-called "master batch system". That is, PTT (A) can be manufactured by melt kneading 0.5 to 20 parts by weight of PTT(B) with 100 parts by weight of polytrimethylene terephthalate (C) (may be abbreviated as PTT(C) hereinafter) which is essentially composed of a trimethylene terephthalate unit and has an intrinsic viscosity of 0.5 to 1.6 dl/g.

PTT (C) is the same polyester as PTT(A) or PTT(B) except that it does not contain the compound represented by the formula (I).

PTT (C) can be manufactured by the same method as PTT (A) or PTT (B) except that the compound represented by the formula (I) is not added.

Melt kneading may be carried out by using a melt extruder after a base chip of PTT (C) is blended with a master chip of PTT (B) in a drier. The master chip and the base chip may be molten by using different melt extruders and then kneaded together. After the base chip is molten in a melt extruder or batch melting pot, the master chip may be fed to be melt kneaded with the molten base chip. The temperature for melt kneading is preferably 250 to 270°C. The pressure for melt kneading may be normal pressure but preferably a reduced pressure to prevent a reduction in intrinsic viscosity. The reduced pressure is preferably 100 Pa or less, more preferably 80 Pa or less. A melt extruder having a suction port which can be connected to a pump may be used to carry out melt kneading under reduced pressure.

When the amount of PTT(B) is small as compared with PTT(C), uniform dispersion is hardly effected. When the amount is too large, the amount of the master chip becomes large, whereby the amount of the compound represented by the formula (I) becomes large disadvantageously. The amount of the master chip is particularly preferably 1 to 10 parts by weight based on 100 parts by weight of the base chip.

### <fiber>

A PTT (A) fiber can be manufactured by a conventionally known method. For example, PTT(A) is melt spun at 240 to 280°C at a rate of 400 to 5,000 m/min to be manufactured. When the spinning rate falls within this range, the strength of the obtained polyester fiber becomes sufficiently high and the fiber can be stably wound up.

The fiber can be stretched after it is wound up or continuously without being wound up. Stretched yarn can be obtained by this process. Further, alkali weight reduction is preferably carried out on the fiber of the present invention to improve its feel.

The cyclic dimer content of the fiber of the present invention is preferably 0.01 to 2.5 wt%. When the cyclic dimer content falls within this range, dyeing nonuniformity rarely occurs in the dyeing step. The cyclic dimer content is more preferably 0.01 to 1.5 wt%. To reduce the cyclic dimer content of the fiber of the present invention, it is effective that the residence time from the melting of PTT (A) to spinning should be reduced to preferably 20 minutes or less.

The spinneret used for spinning is not limited to a particular shape and may be circular, non-circular, solid or hollow.

The chip and fiber of PTT(A) may optionally contain a small amount of an additive such as lubricant, pigment, dye, antioxidant, solid-phase polycondensation accelerator, fluorescent brightener, antistatic agent, anti-fungus agent, ultraviolet light absorber, optical stabilizer, thermal stabilizer, light screen or delustering agent. Particularly, titanium oxide as a delustering agent is preferably added. Titanium oxide having an average particle diameter of 0.01 to 2 µm is preferably contained in PTT(A) in an amount of 0.01 to 10 wt%.

Dyed yarn can be obtained from the fiber of the present invention through the steps of general scouring, dyeing, alkali reduction cleaning, finishing agent application, dehydration and drying. General cheese dyeing or hank dyeing is preferably employed. The fiber is preferably dyed with an alkali decomposable disperse dye at a high temperature preferably 110 to 120°C and a high pressure. Since the fiber of the present invention is a dyeable fiber, the dyeing start temperature is a temperature 20 °C lower than that of a general polyethylene terephthalate fiber, and the temperature elevation rate is preferably reduced to about 50 % of that of the general polyethylene terephthalate fiber to prevent dyeing nonuniformity.

### Examples

The following examples are provided for the purpose of further illustrating the present invention but are in no way to be taken as limiting. Values in examples were measured by the following methods.
(1) intrinsic viscosity:
   The intrinsic viscosities of the polytrimethylene terephthalate and the fiber were obtained from viscosity values measured in an orthochlorophenol solution at 35°C.
(2) amount of dipropylene glycol:
   A polytrimethylene terephthalate sample was sealed in a tube together with an excessive amount of methanol and heated at 260°C in an autoclave for 4 hours to decompose methanol. The amount of dipropylene glycol contained in the decomposed product was determined by gas chromatography (HP6890 Series GC System of Hewlett Packard Co., Ltd.) to obtain the weight percentage of dipropylene glycol based on the weight of the measured polymer.
(3) Content of cyclic dimer:
   An apparatus constructed by connecting two of TSKgel G2000H8 GPC columns of Waters Co., Ltd. to the 486 liquid chromatograph of Waters Co., Ltd. was used. A sample prepared by dissolving 1 mg of the polytrimethylene terephthalate sample in 1 ml of hexafluoroisopropanol and diluting the resulting solution with 10 ml of chloroform as a developing solvent was injected into the apparatus to obtain the weight percentage of the cyclic dimer contained in the polymer from the calibration curve of the standard cyclic dimer.
(4) Cyclic dimer forming rate:
   A polytrimethylene terephthalate chip was re-molten at 260°C in a nitrogen atmosphere and kept for 20 minutes. Thereafter, the content of the cyclic dimer before and after it was re-molten was analyzed to obtain the cyclic dimer forming rate.
(5) Color b' value after crystallization:
   The polytrimethylene terephthalate chip was dried at 140°C for 2 hours and measured. As for the hue of the fiber, a knitted fabric was measured with the color difference meter (type: CR-200) of Minolta Co., Ltd.
(6) Measurement of calcium content, phosphorus content and cobalt content:
   The polytrimethylene terephthalate sample was molten by heating to form a round disk, and the calcium content, phosphorus content and cobalt content of this round disk were determined by the ZSX100e fluorescent X-ray apparatus of Rigaku Co., Ltd.
(7) Determination of content of phosphonate compound:
   The polytrimethylene terephthalate sample was dissolved in a mixed solvent of deuterated trifluoroacetate and deuterated chloroform in a weight ratio of 1/1 to measure its nuclear magnetic resonance spectrum (¹H-NMR) by using the JEOL A-600 superconductive FT-NMR of JEOL Ltd. The content of a phosphinate compound was determined from the spectrum pattern in accordance with a commonly used method.
(8) Determination of the amount of polyester-soluble titanium metal element:
   The polytrimethylene terephthalate sample was dissolved in orthochlorophenol to carry out extraction with 0.5 N hydrochloric acid. Quantity determination was carried out on the extract by using the Z-8100 atomic absorptiometer of Hitachi Ltd. When the dispersion of an inorganic titanium compound not dissolved in a polyester such as titanium oxide was confirmed in the extract obtained after extraction with 0.5 N hydrochloric acid, titanium oxide particles were precipitated by a centrifugal separator. Thereafter, only the supernatant was collected to determine the amount of the titanium metal element by an atomic absorptiometer. The amount of the polyester-soluble titanium element can be determined by this operation.
(9) Tensile strength and tensile elongation of fiber:
   The tensile strength and tensile elongation of the fiber were measured in accordance with the method specified in JIS L1013-1992. That is, a tensile test was carried out on a fiber sample having a length of 25 cm at an elongation rate of 20 cm/min by using a tensile tester (AG-E autograph of Shimadzu Corporation) . The tensile strength and tensile elongation of the fiber were obtained from a load and elongation at the maximum yield point, respectively.

### Example 1

A mixture of 100 parts by weight of dimethyl terephthalate and 70.5 parts by weight of trimethylene glycol and 0.053 part by weight of tetra-n-butyl titanate were fed to a reactor equipped with a stirrer, fractionating column and methanol distillation condenser. An ester interchange reaction was carried out while the inside temperature of the reactor was gradually elevated from 140°C and methanol formed by the reaction was distilled out to the outside of the system. The inside temperature of the reactor reached 210°C in 3 hours after the start of the reaction.

The obtained reaction product was transferred to another reactor equipped with a stirrer and glycol distillation condenser to carry out a polymerization reaction while the inside temperature of the reactor was gradually raised from 210°C to 265°C and the inside pressure was reduced from normal pressure to 70 Pa. The polymerization reaction was terminated when the intrinsic viscosity of the reaction product became 0.65 dl/g while the melt viscosity in the reactor was monitored. Thereafter, 0.106 part by weight of CDHMP (trade name: Irganox 1425, manufactured by Ciba Specialty Chemicals Co. , Ltd.) was added to be melt kneaded with the reaction product for 15 minutes.

CDHMP is calcium diethylbis (((3,5-bis(1,1-dimethylethyl)-4-hydroxyphenyl)methyl)phosphonate) (another name: calcium bis{ethyl((3,5-bis(1,1-dimethylethyl)-4-hydroxyphenyl)methyl)phosphonate}). This compound is a compound of the formula (I) in which R₁ and R₂ are each a t-butyl group, R₃ is an ethyl group, n is 1, m is 2 and M is Ca.

The molten polymer was extruded into a strand in cooling water from the bottom of the reactor and cut with a strand cutter to obtain a chip.

The obtained chip was pre-crystallized at 120°C for 4 hours and then fed to a tumbler type solid-state polymerizer. The inside temperature of the solid-state polymerizer was raised to 200°C in a nitrogen atmosphere to carry out a solid-state polymerization reaction under a high vacuum of 70 Pa for about 14 hours. A chip having an intrinsic viscosity of 0.93 dl/g was obtained.

After the obtained chip was further dried at 120°C for 4 hours, it was molten at 260°C and spun at a delivery rate of 34 g/min and a take-up rate of 2,400 m/min by using an extrusion spinning machine equipped with a spinneret having 36 round holes with a diameter of 0.27 mm to obtain unstretched yarn. The obtained unstretched yarn was fed to a drawing machine having a 60°C heating roller and 160°C plate heater to be stretched at a draw ratio of 1.7 times so as to obtain a 83 dtex/36 filaments fiber.

The evaluation results of the obtained chip and fiber are shown in Tables 1 and 2.

### Example 2

Melt polymerization and solid-state polymerization were carried out in the same manner as in Example 1 except that CDHMP was not added to obtain a chip having an intrinsic viscosity of 0.98 dl/g. This chip was re-molten at 260°C by using a double-screw extruder, and CDHMP was added from the side feeder in an amount of 0.1 wt%. Thereafter, the extruded strand was cut with the strand cutter again to obtain a chip having an intrinsic viscosity of 0.93 dl/g. The obtained chip was formed into a fiber in the same manner as in Example 1. The evaluation results are shown in Tables 1 and 2.

### Example 3

Melt polymerization and solid-state polymerization were carried out in the same manner as in Example 1 except that CDHMP was not added to obtain a chip having an intrinsic viscosity of 0.93 dl/g. 100 parts by weight of the obtained chip was uniformly sprayed with 21.2 parts by weight of a dichloromethane solution containing 5 wt% of CDHMP and then dried at normal temperature in a nitrogen stream. The obtained chip was formed into a fiber in the same manner as in Example 1. The evaluation results are shown in Tables 1 and 2.

### Comparative Example 1

The procedure of Example 1 was repeated except that CDHMP was not added. The evaluation results are shown in Tables 1 and 2.

**Table 1**

| | Intrinsic viscosity | DPG | CD | color b' value | CDHMP | cyclic dimer formation rate | content of Ca element | content of P element | content of Ti element |
|---|---|---|---|---|---|---|---|---|---|
| | dL/g | wt% | wt% | - | wt% | wt%/min | ppm | ppm | mmol%/ total of all dicarboxylic acid components |
| Ex.1 | 0.93 | 0.19 | 0.98 | 2.3 | 0.1 | 0.004 | 62 | 93 | 30 |
| Ex.2 | 0.93 | 0.22 | 1.12 | 2.8 | 0.1 | 0.003 | 63 | 94 | 29 |
| Ex.3 | 0.93 | 0.21 | 1.07 | 3.1 | 0.1 | 0.003 | 65 | 96 | 31 |
| C.Ex.1 | 0.93 | 0.21 | 1.08 | 3.0 | 0.0 | 0.028 | 0 | 0 | 31 |

| | | | | | | | | | |
|---|---|---|---|---|---|---|---|---|---|
| Ex.: Example, C.Ex.: Comparative Example DPG: content of dipropylene glycol CD: content of cyclic dimer | | | | | | | | | |

**Table 2 (fiber)**

| | Tensile strength | tensile elongation | CD |
|---|---|---|---|
| | cN/dtex | % | wt% |
| Example 1 | 3.0 | 41 | 1.04 |
| Example 2 | 3.1 | 42 | 1.19 |
| Example 3 | 2.9 | 40 | 1.14 |
| Comparative Example 1 | 3.1 | 41 | 1.58 |

| | | | |
|---|---|---|---|
| CD: content of cyclic dimer | | | |

### Reference Example 1 (base chip)

A mixture of 100 parts by weight of dimethyl terephthalate and 70.5 parts by weight of trimethylene glycol and 0.053 part by weight of tetra-n-butyl titanate were fed to a reactor equipped with a stirrer, fractionating column and methanol distillation condenser. An ester interchange reaction was carried out while the inside temperature of the reactor was gradually elevated from 140°C and methanol formed by the reaction was distilled out to the outside of the system. The inside temperature of the reactor reached 210°C in 3 hours after the start of the reaction.

The obtained reaction product was transferred to another reactor equipped with a stirrer and glycol distillation condenser to carry out a polymerization reaction while the inside temperature of the reactor was gradually raised from 210°C to 265°C and the inside pressure was reduced from normal pressure to 70 Pa. The polymerization reaction was terminated when the intrinsic viscosity of the reaction product became 0.65 dl/g while the melt viscosity in the reactor was monitored. The molten polymer was extruded into a strand in cooling water from the bottom of the reactor and cut with the strand cutter to obtain a chip.

The obtained chip was pre-crystallized at 120°C for 4 hours and then fed to a tumbler type solid-state polymerizer. The inside temperature of the solid-state polymerizer was raised to 200°C in a nitrogen atmosphere to carry out a solid-state polymerization reaction under a high vacuum of 70 Pa. The polymerization reaction was terminated when the intrinsic viscosity reached 0.93 dl/g to obtain a base chip (to be referred to as "base chip 1" hereinafter).

### Example 4 (master chip)

After the base chip 1 was dried at 120°C for 4 hours, it was fed to an vented double-screw extruder (KTX-46 of Kobe Steel Co., Ltd.). It was melt kneaded at a residence time of 5 minutes by setting the temperature of the kneading section of the double-screw extruder to 265°C to ensure that the content of CDHMP was such as shown in Table 3. The obtained polymer was extruded into a strand in cooling water and cut with the strand cutter to obtain a master chip (to be referred to as "master chip 1" hereinafter). The evaluation results are shown in Table 3.

### Comparative Example 2

The procedure of Example 4 was repeated except that the content of CDHMP was changed as shown in Table 3. However, a master chip could not be obtained.

**Table 3 (master chip)**

| | content of CDHMP | intrinsic viscosity | DPG | CD | content of Ca element | content of P element | content of Ti element |
|---|---|---|---|---|---|---|---|
| | wt% | dL/g | wt% | wt% | wt% | wt% | mmol% |
| Example 4 | 5 | 0.83 | 0.20 | 1.10 | 0.30 | 0.45 | 31 |
| Comparative Example 2 | 50 | a master chip could not be obtained | | | | | |

| | | | | | | | |
|---|---|---|---|---|---|---|---|
| DPG: content of dipropylene glycol CD: content of cyclic dimer #: mmol% based on the total of all the dicarboxylic acid components | | | | | | | |

### Example 5 (master batch method)

The base chip 1 and the master chip 1 were blended together in a ratio shown in Table 4, and the resulting blend was dried at 120°C for 4 hours and fed to a vented double-screw extruder (KTX-46 of Kobe Steel Co., Ltd.). The obtained blend was melt kneaded at a residence time of 5 minutes by setting the temperature of the kneading section of the double-screw extruder to 265°C. The obtained polymer was extruded into a strand in cooling water and cut with the strand cutter to obtain a chip.

After the obtained chip was further dried at 120°C for 4 hours, it was molten at 260°C and spun at a delivery rate of 34 g/min and a take-up rate of 2,400 m/min by using an extrusion spinning machine equipped with a spinneret having 36 round holes with a diameter of 0.27 mm to obtain unstretched yarn. The obtained unstretched yarn was fed to a drawing machine having a 60°C heating roller and 160°C plate heater to be stretched at a draw ratio of 1.7 times so as to obtain 83 dtex/36 filaments stretched yarn. The evaluation results of the obtained chip and fiber are shown in Tables 4 and 5.

### Comparative Example 3

The procedure of Example 5 was repeated except that the blending ratio was changed as shown in Table 4. The evaluation results of the obtained chip are shown in Table 4.

### Example 6

The base chip 1 and the master chip 1 were blended together in a ratio shown in Table 4. The measurement results of the intrinsic viscosity and cyclic dimer content of the resulting blend are shown in Table 4. After it was dried at 120°C for 4 hours, it was molten at 260°C and spun at a delivery rate of 34 g/min and a take-up rate of 2,400 m/min by using an extrusion spinning machine equipped with a spinneret having 36 round holes with a diameter of 0.27 mm to obtain unstretched yarn. The obtained unstretched yarn was fed to a drawing machine having a 60°C heating roller and 160°C plate heater to be stretched at a draw ratio of 1.7 times so as to obtain 83 dtex/36 filaments stretched yarn. The evaluation results of the obtained polyester fiber are shown in Table 5.

### Comparative Example 4

The procedure of Example 5 was repeated except that the blending ratio was changed as shown in Table 4. The evaluation results of the obtained chip and fiber are shown in Tables 4 and 5.

**Table 4**

| | Blending ratio (wt%) | | intrinsic viscosity | DPG | CD | color b' value | cyclic dimer forming rate | content of Ca element | content of P element | content of Ti element |
|---|---|---|---|---|---|---|---|---|---|---|
| | base chip 1 | master chip 1 | dL/g | wt% | wt% | - | wt%/min | ppm | ppm | mmol%^{#} |
| Example 5 | 98 | 2 | 0.87 | 0.20 | 1.10 | 2.8 | 0.004 | 63 | 93 | 29 |
| Comparative Example 3 | 100 | 0 | 0.88 | 0.19 | 1.15 | 3.5 | 0.030 | 0 | 0 | 32 |
| Example 6 | 98 | 2 | 0.88 | - | 1.09 | - | - | - | - | 30 |
| Comparative Example 4 | 100 | 0 | 0.90 | - | 1.18 | - | - | - | - | 27 |

| | | | | | | | | | | |
|---|---|---|---|---|---|---|---|---|---|---|
| DPG: content of dipropylene glycol #: mmol% based on the total of all the dicarboxylic acid components | | | | | | | | | | |

**Table 5 (fiber)**

| | Tensile strength | tensile elongation | CD |
|---|---|---|---|
| | cN/dtex | % | wt% |
| Example 5 | 2.8 | 40 | 1.18 |
| Example 6 | 3.1 | 42 | 1.14 |
| Comparative Example 4 | 3.1 | 41 | 1.58 |

| | | | |
|---|---|---|---|
| CD: content of cyclic dimer | | | |

### Example 7

A mixture of 100 parts by weight of dimethyl terephthalate and 70 . 5 parts by weight of trimethylene glycol and 0.053 part by weight of tetra-n-butyl titanate were fed to a reactor equipped with a stirrer, fractionating column and methanol distillation condenser. An ester interchange reaction was carried out while the inside temperature of the reactor was gradually elevated from 140°C and methanol formed by the reaction was distilled out to the outside of the system. The inside temperature of the reactor reached 210°C in 3 hours after the start of the reaction.

The obtained reaction product was transferred to another reactor equipped with a stirrer and glycol distillation condenser to carry out a polymerization reaction while the inside temperature of the reactor was gradually raised from 210°C to 265°C and the inside pressure was reduced from normal pressure to 70 Pa. The polymerization reaction was terminated when the intrinsic viscosity of the reaction product became 0.70 dl/g while the melt viscosity in the reactor was monitored. Thereafter, 1.06 parts by weight of CDHMP was added to be melt kneaded with the reaction product for 15 minutes. The molten polymer was extruded into a strand in cooling water from the bottom of the reactor and cut with the strand cutter to obtain a chip.

10 parts by weight of the obtained chip and 90 parts by weight of a polytrimethylene terephthalate chip having an intrinsic viscosity of 0.93 dl/g and a cyclic dimer content of 1.05 wt% (Coltera CP50921P of Shell Co. , Ltd.) were blended together. The measurement results of the intrinsic viscosity and cyclic dimer content of the resulting blend are shown in Table 6.

After the obtained blend was further dried at 75°C for 1 hour and at 125°C for 5 hours, it was molten at 260°C and spun at a delivery rate of 34 g/min and a take-up rate of 2,400 m/min by using an extrusion spinning machine equipped with a spinneret having 36 round holes with a diameter of 0.27 mm to obtain unstretched yarn. The obtained unstretched yarn was fed to a drawing machine having a 60°C heating roller and 160°C plate heater to be stretched at a draw ratio of 1.7 times so as to obtain 83 dtex/36 filaments stretched yarn.

The evaluation results are shown in Table 7.

### Reference Example 8 and Example 9

The procedure of Example 7 was repeated except that the phosphorus-based compound shown in Table 7 was used in place of CDHMP. The evaluation results are shown in Tables 6 and 7.

### Example 10

A polytrimethylene terephthalate chip having an intrinsic viscosity of 0.93 dl/g and a cyclic dimer content of 1.05 wt% (Coltera CP50921P of Shell Co., Ltd.) was dried at 75°C for 1 hour and at 125°C for 5 hours and re-molten at 260°C by using a double-screw extruder, and CDHMP was added from the side feeder in an amount of 0.1 wt%. The obtained product was melt spun and stretched directly in the same manner as in Example 7. The evaluation results are shown in Tables 6 and 7.

### Comparative Example 5

The procedure of Example 7 was repeated except that only a polytrimethylene terephthalate chip having an intrinsic viscosity of 0.93 dl/g and a cyclic dimer content of 1.05 wt% (Coltera CP50921P of Shell Co., Ltd.) was melt spun and stretched. The evaluation results are shown in Tables 6 and 7.

**Table 6**

| | Intrinsic viscosity | CD | content of Ti element |
|---|---|---|---|
| | dL/g | wt% | mmol%# |
| Example 7 | 0.92 | 0.97 | 29 |
| Reference Example 8 | 0.91 | 1.01 | 28 |
| Example 9 | 0.92 | 0.99 | 33 |
| Example 10 | 0.90 | 0.98 | 27 |
| Comparative Example 5 | 0.91 | 1.16 | 35 |

| | | | |
|---|---|---|---|
| #: mmol% based on the total of all the dicarboxylic acid components | | | |

**Table 7 (fiber)**

| | Intrinsic viscosity | CD | content of P element | phosphorus-based compound | | tensile strength | tensile elongation |
|---|---|---|---|---|---|---|---|
| | dL/g | wt% | ppm | type | Wt% | cN/dtex | % |
| Example 7 | 0.87 | 1.08 | 95 | CDHMP | 0.1 | 3.0 | 40 |
| Reference Example 8 | 0.86 | 1.11 | 230 | PPA | 0.1 | 3.0 | 41 |
| Example 9 | 0.87 | 1.09 | 90 | PEHMP | 0.1 | 3.0 | 40 |
| Example 10 | 0.88 | 1.07 | 96 | CDHMP | 0.1 | 3.1 | 42 |
| Comparative Example 5 | 0.88 | 1.58 | 0 | - | 0.0 | 3.1 | 41 |

| | | | | | | | |
|---|---|---|---|---|---|---|---|
| CD: content of cyclic dimer CDHMP: calcium diethylbis(((3,5-bis(1,1-dimethylethyl)-4-hydroxyphenyl)methyl)phosphonate) PPA: phenylphosphinic acid (R₄ is a hydrogen atom and R₅ is a phenyl group in the general formula (II)) PEHMP: potassium ethyl(((3,5-bis(1,1-dimethylethyl)-4-hydroxyphenyl)methyl)phosphonate) | | | | | | | |

### Examples 11, 13 and 14, Reference Example 12 Comparative Example 6 (dyeing)

The fibers obtained in Examples 7, 9 and 10, Reference Example 8 and Comparative Example 5 were dyed. Thereafter, the amount of the cyclic dimer produced in each of the dyed fibers was measured. An ordinary dyeing method in which an oligomer (cyclic dimer) dispersant is not added in the dyeing step was employed, and a high-temperature waste disposal apparatus was not used. From the necessity of measuring the amount of the cyclic dimer produced, 1 kg of each of the fibers of Examples 7, 9 and 10, Reference Example 8 and Comparative Example 5 was dyed. Dyeing of the fibers in Examples 11, 13 and 14, Reference Example 12 and Comparative Example 6 was carried out under the same conditions.

Cheese dyeing was employed, the SSP winder (of Kozu Mfg., Co., Ltd.) was used to wind the fiber at a winding density of 0.65 g/cm³, and a dye tube was exchanged. To prevent the disorder of yarns, the yarns were wrapped in a net.
1. scouring step
   1g/l of the SSK-15A scouring agent (of Matsumoto Yushi Seiyaku Co., Ltd.) and 0.5 g/l of the Marpon A-40L chelating agent (of Matsumoto Yushi Seiyaku Co., Ltd.) were injected at 40°C. Thereafter, they were heated at 80°C at a temperature elevation rate of 1°C/min and scoured at that temperature for 20 minutes.
2. dyeing step
   3.5 wt% of the fiber of the TERASIL BLACK BFR dye (of Ciba Specialty Chemicals Co., Ltd.), 0.5 wt% of the fiber of the Levenol V150 level dyeing agent (of Hokuhiro Chemical Co., Ltd.) and 0.3 g/l of a pH control agent containing 80 % of acetic acid were injected at 40°C. They were heated at 115°C at a temperature elevation rate of 1°C/min and dyed at that temperature for 60 minutes.
3. alkali reduction cleaning step
   1 g/l of the Marbelin S-1000 cationic surfactant (of Matsumoto Yushi Seiyaku Co., Ltd.), 2 g/l of NaOH and 2 g/l of hydrosulfite were injected at 40°C. They were heated to 70°C at a temperature elevation rate of 1°C/min and cleaned by alkali reduction at that temperature for 15 minutes.
4. finishing agent application step
   4 wt% of the fiber of the Brian LC-23K (of Matsumoto Yushi Seiyaku Co., Ltd.) was applied to the obtained yarn at 50°C for 10 minutes, dehydrated and dried.
5. finish winding step
   The dyed yarns obtained by the above operations in Examples 11, 13 and 14, Reference Example 12 and Comparative Example 6 were wound up by using a pineapple corn winding 3°51' 200mm (8-inch) traverse winder (of Murata Mfg. Co., Ltd.) having a cam type traverse mechanism at a winding rate of 450 m/min. A test was carried out at filler gate tensions of 9.8 cN and 0 cN in the yarn passage in this step.

The cyclic dimer produced when the yarn was wound up under the above conditions was filtered with a filter having 4 µm-diameter holes, the weight of the cyclic dimer was measured, and the weight percentage of the cyclic dimer based on the fiber was calculated and shown as the content of the cyclic dimer in Table 8. Level 1: When the yarn was wound at a filler gate tension of 9.8 cN, end breakage occurred frequently due to the production of a large amount of an oligomer 10 minutes after the start of winding the yarn of Comparative Example 6, thereby making operation impossible. Although the production of a small amount of a cyclic dimer was observed in the fibers (Examples 7, 9 and 10) of the present invention and Reference Example 8, end breakage did not occur. Level 2: When the yarn was wound at a filler gate tension of 0 cN, end breakage occurred 30 minutes after the start of winding the dyed yarn of Comparative Example 6. Although the production of a cyclic dimer was seen in the fibers (Examples 7, 9 and 10) of the present invention and Reference Example 8, end breakage did not occur even once when 1 kg of the fiber was wound up. Winding was very stable from the viewpoint of operation efficiency. The results are shown in Table 8.

**Table 8**

| Level | Used polyester fiber | amount of produced cyclic dimer (wt%) | level 1: operation state 10 minutes after the start of winding | level 2: visual observation of cyclic dimer after winding of 1 kg of fiber |
|---|---|---|---|---|
| Example 11 | Example 7 | 0.081 | No problem | filler becomes slightly white |
| Reference Example 12 | Reference Example 8 | 0.080 | No problem | filler becomes slightly white |
| Example 13 | Example 9 | 0.078 | No problem | filler becomes slightly white |
| Example 14 | Example 10 | 0.074 | No problem | filler becomes slightly white |
| Comparative Example 6 | Comparative Example 5 | 0.212 | End breakage often occurs, stable operation impossible | Filler becomes totally white like piled snow |
| Remarks | | filler gate tension of 0 cN | filler gate tension of 9.8 cN | filler gate tension of 9.8 cN |

As obvious from Table 8, the polyester fiber of the present invention produced only a small amount of the cyclic dimer in the dyeing step, and its manufacturing process was very stable.

### Example 15

A mixture of 100 parts by weight of dimethyl terephthalate and 70.5 parts by weight of trimethylene glycol and 0.053 part by weight of tetra-n-butyl titanate were fed to a reactor equipped with a stirrer, fractionating column and methanol distillation condenser. An ester interchange reaction was carried out while the inside temperature of the reactor was gradually elevated from 140°C and methanol formed by the reaction was distilled out to the outside of the system.
The inside temperature of the reactor reached 210°C in 3 hours after the start of the reaction.

The obtained reaction product was then transferred to another reactor equipped with a stirrer and glycol distillation condenser to carry out a polymerization reaction while the inside temperature of the reactor was gradually raised from 210°C to 265°C and the inside pressure was reduced from normal pressure to 70 Pa. The polymerization reaction was terminated when the intrinsic viscosity of the reaction product became 0.65 dl/g while the melt viscosity of the reaction system was monitored. The molten polymer was extruded into a strand in cooling water from the bottom of the reactor and cut with the strand cutter to obtain a chip.

The obtained chip was pre-crystallized at 120°C for 4 hours and then fed to a tumbler type solid-state polymerizer. The inside temperature of the solid-state polymerizer was raised to 200°C in a nitrogen atmosphere to carry out a solid-state polymerization reaction under a high vacuum of 70 Pa until the intrinsic viscosity became 1.05 dl/g. A chip having a cyclic dimer content of 1.1 wt% was obtained.

After the obtained chip was re-molten at 260°C by using a double-screw extruder, 0.1 wt% of CDHMP and 15 ppm in terms of the cobalt element of cobalt acetate were added from the side feeder. Thereafter, the obtained strand was cut with the strand cutter again to obtain a chip having an intrinsic viscosity of 0.93 dl/g. The evaluation results of the obtained polyester are shown in Table 10.

After the obtained chip was further dried at 120°C for 4 hours, it was molten at 260°C and spun at a delivery rate of 34 g/min and a take-up rate of 2,400 m/min by using an extrusion spinning machine equipped with a spinneret having 36 round holes with a diameter of 0.27 mm to obtain unstretched yarn. The obtained unstretched yarn was fed to a drawing machine having a 60°C heating roller and 160°C plate heater to be stretched at a draw ratio of 1.7 times so as to obtain 83 dtex/36 filaments stretched yarn.

The evaluation results of the obtained polyester fiber are shown in Table 11.

### Reference Example 16 and Example 17

Steps up to melt polymerization and solid-state polymerization were the same as in Example 15, and the subsequent steps were carried out in the same manner as in Example 15 except that the compound shown in Table 9 was used in place of CDHMP as the phosphorus compound to be added from the side feeder. The evaluation results of the obtained polyesters are shown in Table 10 and the evaluation results of the fibers are shown in Table 11.

### Example 18

A mixture of 100 parts by weight of dimethyl terephthalate and 70.5 parts by weight of trimethylene glycol, 0.053 part by weight of tetra-n-butyl titanate and 15 ppm in terms of the cobalt element of cobalt acetate were fed to a reactor equipped with a stirrer, fractionating column and methanol distillation condenser. An ester interchange reaction was carried out while the inside temperature of the reactor was gradually elevated from 140°C and methanol formed by the reaction was distilled out to the outside of the system.
The inside temperature of the reactor reached 210°C in 3 hours after the start of the reaction.

The obtained reaction product was then transferred to another reactor equipped with a stirrer and glycol distillation condenser to carry out a polymerization reaction while the inside temperature of the reactor was gradually raised from 210°C to 265°C and the inside pressure was reduced from normal pressure to 70 Pa. The polymerization reaction was terminated when the intrinsic viscosity became 0.70 dl/g while the melt viscosity in the reactor was monitored. Thereafter, 0.106 part by weight of CDHMP was added (corresponding to 0.106 wt% of a phosphorus compound) and melt kneaded with the reaction product for 30 minutes. The molten polymer was extruded into a strand in cooling water from the bottom of the reactor and cut with the strand cutter to obtain a chip.

The obtained chip was pre-crystallized at 120°C for 4 hours and then fed to a tumbler type solid-state polymerizer. The inside temperature of the solid-state polymerizer was raised to 200°C in a nitrogen atmosphere to carry out a solid-state polymerization reaction under a high vacuum of 70 Pa. The solid-state polymerization was terminated when the intrinsic viscosity reached 0.93 dl/g to obtain a chip.
The evaluation results of the obtained polyester are shown in Table 10. The obtained chip was spun and stretched in the same manner as in Example 15 to obtain a polyester fiber.
The evaluation results of the fiber are shown in Table 11.

### Comparative Example 7

The procedure of Example 15 was repeated except that only the operation of adding the phosphorus compound and the cobalt compound from the side feeder of a double-screw extruder was not carried out. The results of the obtained polyester are shown in Table 10 and the evaluation results of the fiber are shown in Table 11.

**Table 9**

| Level | phosphorus compound | |
|---|---|---|
| | Type | wt% |
| Example 15 | CDHMP | 0.1 |
| Reference Example 16 | PPA | 0.1 |
| Example 17 | PEHMP | 0.1 |

| | | |
|---|---|---|
| CDHMP: calcium diethylbis(((3,5-bis(1,1-dimethylethyl)-4-hydroxyphenyl)methyl)phosphonate) PPA: phenylphosphinic acid PEHMP: potassium ethyl(((3,5-bis(1,1-dimethylethyl)-4-hydroxyphenyl)methyl)phosphonate) | | |

**Table 10**

| | Content of P element | content of Co element | content of Ti element | intrinsic viscosity | CD | color b' value |
|---|---|---|---|---|---|---|
| | ppm | ppm | mmol%^{#} | dL/g | wt% | |
| Example 15 | 85 | 17 | 28 | 0.93 | 1.3 | -2.0 |
| Reference Example 16 | 223 | 13 | 32 | 0.93 | 1.4 | -1.3 |
| Example 17 | 89 | 15 | 30 | 0.94 | 1.3 | -1.1 |
| Example 18 | 93 | 14 | 27 | 0.93 | 1.2 | -1.8 |
| Comparative Example 7 | - | - | 31 | 0.92 | 1.0 | 2.4 |

| | | | | | | |
|---|---|---|---|---|---|---|
| CD: content of cyclic dimer #: mmol% based on the total of all the dicarboxylic acid components | | | | | | |

**Table 11 (fiber)**

| | Tensile strength | tensile elongation | CD | color b' value |
|---|---|---|---|---|
| | cN/dtex | % | wt% | |
| Example 15 | 2.9 | 40 | 1.4 | -5.3 |
| Reference Example 16 | 3.1 | 42 | 1.4 | -4.5 |
| Example 17 | 2.9 | 42 | 1.3 | -4.0 |
| Example 18 | 3.0 | 41 | 1.4 | -5.8 |
| Comparative Example 7 | 3.1 | 40 | 2.0 | -0.5 |

| | | | | |
|---|---|---|---|---|
| CD: content of cyclic dimer | | | | |

As obvious from the above Examples, the polyesters and fibers of the present invention have a low cyclic dimer forming rate and a low content of the cyclic dimer after it is re-molten. Further, it has a good appearance with a small color b' value. Further, according to the present invention, there can be provided a polyester which reproduces only a small amount of the cyclic dimer when it is melt molded, makes the melt spinning step stable, produces only a small amount of the cyclic dimer in the dyeing, weaving and knitting steps and has excellent quality control capability as well as a fiber made from the polyester. The obtained fiber retains normal mechanical properties and can be satisfactorily used in the application field of the conventionally used polytrimethylene terephthalate fibers.

### Industrial feasibility

The PTT (A) of the present invention is useful as a raw material for fibers and woven and knitted fabrics.

## Claims

1. Polytrimethylene terephthalate (A) which is essentially composed of a trimethylene terephthalate unit, has an intrinsic viscosity of 0.5 to 1.6 dl/g and contains 0.01 to 0.5 wt% of a compound represented by the following formula (I) : 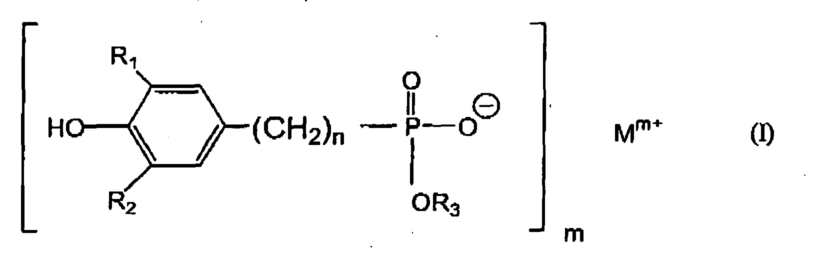 (R₁, R₂ and R₃ are the same or different hydrocarbon groups having 1 to 10 carbon atoms, n is an integer of 1 to 5, M is an alkali metal atom or alkali earth metal atom, and m is 1 when M is an alkali metal atom and 2 when M is an alkali earth metal atom).

2. The polytrimethylene terephthalate according to claim 1, wherein the content of a cyclic dimer is 0.01 to 2 wt%.

3. The polytrimethylene terephthalate according to claim 1, wherein the reproduced cyclic dimer forming rate at 260°C in a nitrogen atmosphere is 0.01 wt%/min or less.

4. The polytrimethylene terephthalate according to claim 1, wherein the amount of the titanium metal element contained in the residual catalyst molten and contained in the polytrimethylene terephthalate is 2 to 150 mmol% based on the total of all the dicarboxylic acid components as constituent components of the polytrimethylene terephthalate.

5. The polytrimethylene terephthalate according to claim 1, wherein the color b' value in the L'a'b' specification system after 2 hours of a heat treatment at 140°C is 2 or less.

6. The polytrimethylene terephthalate according to claim 5, wherein the content of the cobalt element is 1 to 100 ppm.

7. A fiber made from the polytrimethylene terephthalate of claim 1.

8. The fiber according to claim 7, wherein the content of a cyclic dimer is 0.01 to 2.5 wt%.

9. Polytrimethylene terephthalate (B) which is essentially composed of a trimethylene terephthalate unit as a recurring unit, has an intrinsic viscosity of 0.5 to 1.6 dl/g and contains more than 0.5 wt% and 30 wt% or less of a compound represented by the following formula (I): 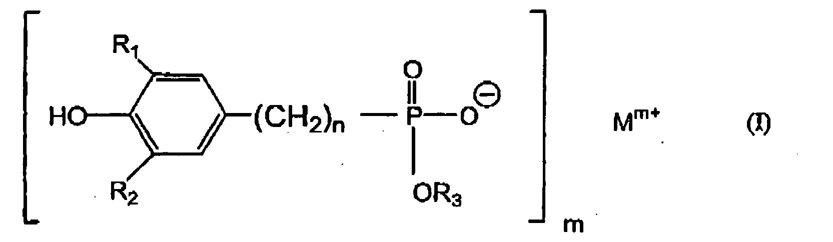 (R₁, R₂ and R₃ are the same or different hydrocarbon groups having 1 to 10 carbon atoms, n is an integer of 1 to 5, M is an alkali metal atom or alkali earth metal atom, and m is 1 when M is an alkali metal atom and 2 when M is an alkali earth metal atom).

10. A method of manufacturing polytrimethylene terephthalate (A), comprising the step of melt kneading 100 parts by weight of polytrimethylene terephthalate (C) essentially composed of a trimethylene terephthalate unit and having an intrinsic viscosity of 0.5 to 1.6 dl/g with 0.5 to 20 parts by weight of the polytrimethylene terephthalate (B) of claim 9.

11. A method of manufacturing polytrimethylene terephthalate by esterifying terephthalic acid with trimethylene glycol or transesterifying an ester forming derivative of terephthalic acid with trimethylene glycol and polymerizing the obtained product, wherein
a compound represented by the following formula (I) is added in an amount of 0.01 to 0.5 wt% based on the polytrimethylene terephthalate after the intrinsic viscosity of the polymethylene terephthalate becomes 0.4 dl/g or more : 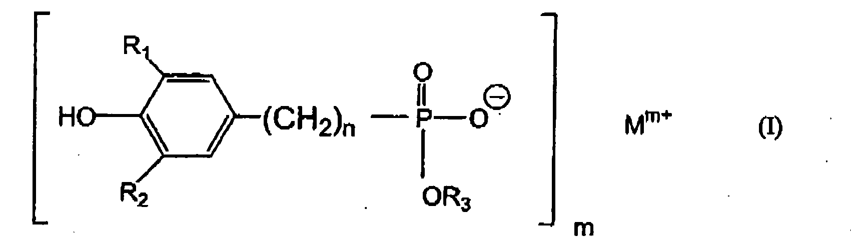 (R₁, R₂ and R₃ are the same or different hydrocarbon groups having 1 to 10 carbon atoms, n is an integer of 1 to 5, M is an alkali metal atom or alkali earth metal atom, and m is 1 when M is an alkali metal atom and 2 when M is an alkali earth metal atom).

## Patentansprüche

1. Polytrimethylenterephthalat (A), welches im wesentlichen aus einer Trimethylenterephthalateinheit aufgebaut ist, eine innere Viskosität von 0,5 bis 1,6 dl/g aufweist und 0,01 bis 0,5 Gew.-% einer Verbindung, dargestellt durch die folgende Formel (I) enthält: 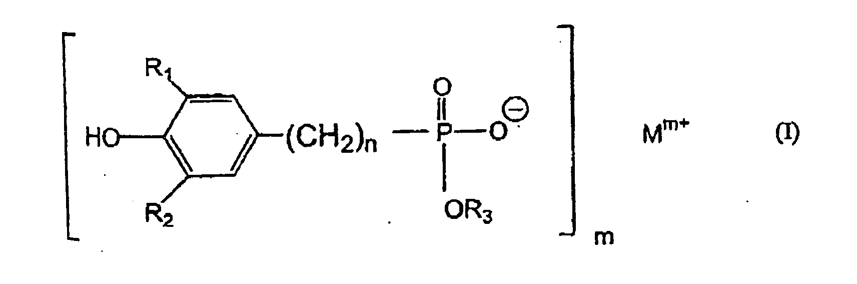 (R₁, R₂ und R₃ sind die gleichen oder unterschiedliche Kohlenwasserstoffgruppen mit 1 bis 10 Kohlenstoffatomen, n ist eine ganze Zahl von 1 bis 5, M ist einAlkalimetallatom oder Erdalkalimetallatom und m ist 1, wenn M ein Alkalimetallatom ist, und 2, wenn M ein Erdalkalimetallatom ist.

2. Polytrimethylenterephthalat gemäß Anspruch 1, wobei der Gehalt eines cyklischen Dimers 0,01 bis 2 Gew.-% beträgt.

3. Polytrimethylenterephthalat gemäß Anspruch 1, wobei die Bildungsrate an wiedererzeugtem cyklischem Dimer bei 260°C in einer Stickstoffatmosphäre 0,01 Gew.-%/min oder weniger beträgt.

4. Polytrimethylenterephthalat gemäß Anspruch 1, wobei die Menge des Titanmetallelements, enthalten in dem restlichen geschmolzenen Katalysator und enthalten in dem Polytrimethylenterephthalat, 2 bis 150 mmol%, basierend auf der Gesamtheit sämtlicher Dicarbonsäurekomponenten als konstituierende Komponenten des Polytrimethylenterephthalats, beträgt.

5. Polytrimethylenterephthalat gemäß Anspruch 1, wobei der Farb-b'-Wert in dem L'a'b'-Spezifikationssystem nach 2 Stunden einer Wärmebehandlung bei 140°C 2 oder weniger beträgt.

6. Polytrimethylenterephthalat gemäß Anspruch 5, wobei der Gehalt des Kobaltelements 1 bis 100 ppm beträgt.

7. Faser, hergestellt aus dem Polytrimethylenterephthalat gemäß Anspruch 1.

8. Faser gemäß Anspruch 7, wobei der Gehalt eines cyklischen Dimers 0,01 bis 2,5 Gew.-% beträgt.

9. Polytrimethylenterephthalat (B), welches im wesentlichen aus einer Trimethylenterephthalateinheit als einer wiederkehrenden Einheit aufgebaut ist, eine innere Viskosität von 0,5 bis 1,6 dl/g aufweist und mehr als 0,5 Gew.-% und 30 Gew.-% oder weniger einer Verbindung, dargestellt durch die folgende Formel (I), enthält: 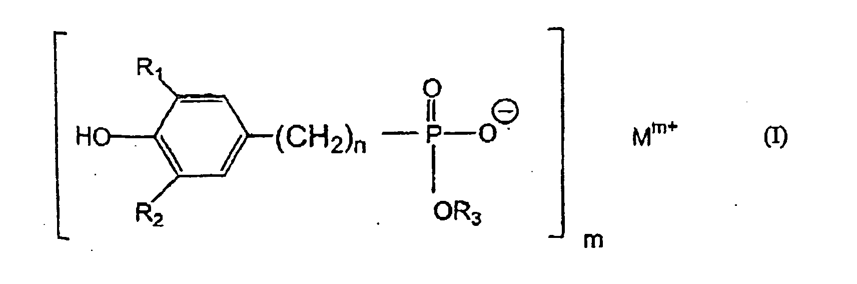 (R₁, R₂ und R₃ sind die gleichen oder unterschiedliche Kohlenwasserstoffgruppen mit 1 bis 10 Kohlenstoffatomen, n ist eine ganze Zahl von 1 bis 5, M ist ein Alkalimetallatom oder Erdalkalimetallatom, und m ist 1, wenn M ein Alkalimetallatom ist, und 2, wenn M ein Erdalkalimetallatom ist).

10. Verfahren zum Herstellen eines Polytrimethylenterephthalats (A), umfassend den Schritt des Schmelzknetens von 100 Gew.-Teilen eines Polytrimethylenterephthalats (C), im wesentlichen aus einer Trimethylenterephthalateinheit aufgebaut und eine innere Viskosität von 0,5 bis 1,6 dl/g aufweisend, mit 0,5 bis 20 Gew.-Teilen des Polytrimethylenterephthalats (B) von Anspruch 9.

11. Verfahren zum Herstellen eines Polytrimethylenterephthalats durch Verestern von Terephthalsäure mit Trimethylenglykol oder Umestern eines Esterbildenden Derivats von Terephthalsäure mit Trimethylenglykol und Polymerisieren des erhaltenen Produkts, wobei eine Verbindung, dargestellt durch die folgende Formel (I), in einer Menge von 0,01 bis 0,5 Gew.-%, basierend auf dem Polytrimethylenterephthalat, zugegeben wird, nachdem die innere Viskosität des Polytrimethylenterephthalats 0,4 dl/g oder mehr wird: 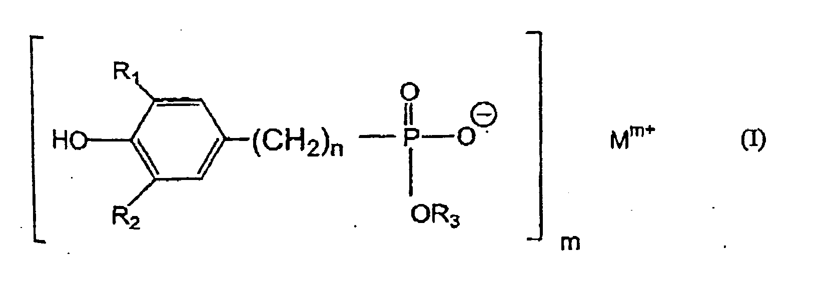 (R₁, R₂ und R₃ sind die gleichen oder unterschiedliche Kohlenwasserstoffgruppen mit 1 bis 10 Kohlenstoffatomen, n ist eine ganze Zahl von 1 bis 5, M ist ein Alkalimetallatom oder Erdalkalimetallatom und m ist 1, wenn M ein Alkalimetallatom ist, und 2, wenn M ein Erdalkalimetallatom ist).

## Revendications

1. Téréphtalate de polytriméthylène (A), lequel est essentiellement composé d'un motif téréphtalate de triméthylène, possède une viscosité intrinsèque de 0,5 à 1,6 dl/g et contient 0,01 à 0,5 % en poids d'un composé représenté par la formule (I) suivante: 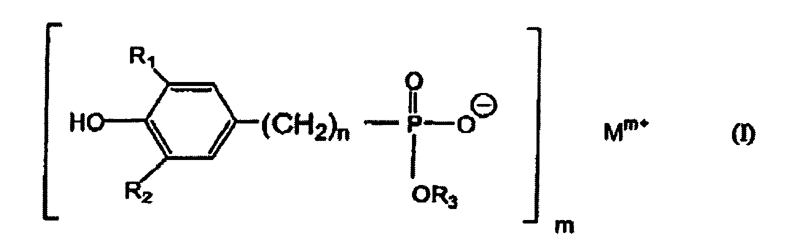 (R₁, R₂ et R₃ sont des groupes hydrocarbonés identiques ou différents contenant 1 à 10 atomes de carbone, n est un nombre entier de 1 à 5, M est un atome de métal alcalin ou un atome de métal alcalino-terreux, et m est 1 quand M est un atome de métal alcalin et 2 quand M est un atome de métal alcalino-terreux).

2. Téréphtalate de polytriméthylène selon la revendication 1, dans lequel la teneur d'un dimère cyclique est de 0,01 à 2 % en poids.

3. Téréphtalate de polytriméthylène selon la revendication 1, dans lequel la vitesse de formation du dimère cyclique reproduite à 260 °C sous une atmosphère d'azote est de 0,01 % en poids/minute ou moins.

4. Téréphtalate de polytriméthylène selon la revendication 1, dans lequel la quantité de l'élément métallique titane contenue dans la matière fondue catalytique résiduelle et contenue dans le téréphtalate de polytriméthylène est de 2 à 150 % en mmole sur la base du total de tous les composants acides dicarboxyliques en tant que composants constitutifs du téréphtalate de polytriméthylène.

5. Téréphtalate de polytriméthylène selon la revendication 1, dans lequel la valeur de couleur b' dans le système de spécification L'a'b' après 2 heures de traitement thermique à 140 °C est de 2 ou moins.

6. Téréphtalate de polytriméthylène selon la revendication 5, dans lequel la teneur en élément cobalt est de 1 à 100 ppm.

7. Fibre fabriquée à partir du téréphtalate de polytriméthylène selon la revendication 1.

8. Fibre selon la revendication 7, dans laquelle la teneur d'un dimère cyclique est de 0,01 à 2,5 % en poids.

9. Téréphtalate de polytriméthylène (B), lequel est essentiellement composé d'un motif téréphtalate de triméthylène en tant que motif récurrent, possède une viscosité intrinsèque de 0,5 à 1,6 dl/g et contient plus de 0,5 % en poids et 30 % en poids ou moins d'un composé représenté par la formule (I) suivante : 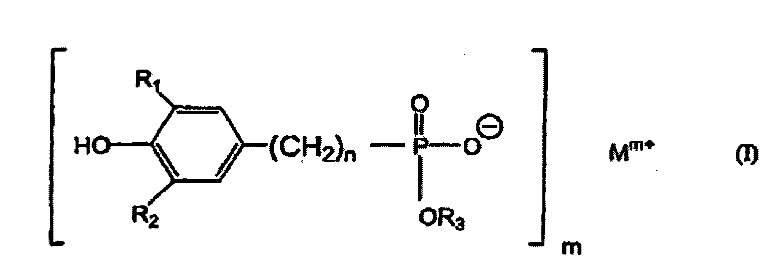 (R₁, R₂ et R₃ sont des groupes hydrocarbonés identiques ou différents contenant 1 à 10 atomes de carbone, n est un nombre entier de 1 à 5, M est un atome de métal alcalin ou un atome de métal alcalino-terreux, et m est 1 quand M est un atome de métal alcalin et 2 quand M est un atome de métal alcalino-terreux).

10. Méthode de fabrication du téréphtalate de polytriméthylène (A), comprenant l'étape de malaxage à l'état fondu de 100 parties en poids de téréphtalate de polytriméthylène (C) essentiellement composé d'un motif téréphtalate de triméthylène et possédant une viscosité intrinsèque de 0,5 à 1,6 dl/g avec 0,5 à 20 parties en poids du téréphtalate de polytriméthylène (B) selon la revendication 9.

11. Méthode de fabrication d'un téréphtalate de polytriméthylène par estérification de l'acide téréphtalique avec du triméthylène glycol ou transestérification d'un dérivé de l'acide téréphtalique formant un ester avec du triméthylène glycol et la polymérisation du produit obtenu, dans laquelle
un composé représenté par la formule (I) suivante est ajouté en une quantité de 0,01 à 0,5 % en poids sur la base du téréphtalate de polytriméthylène après que la viscosité intrinsèque du téréphtalate de polyméthylène soit de 0,4 dl/g ou plus : 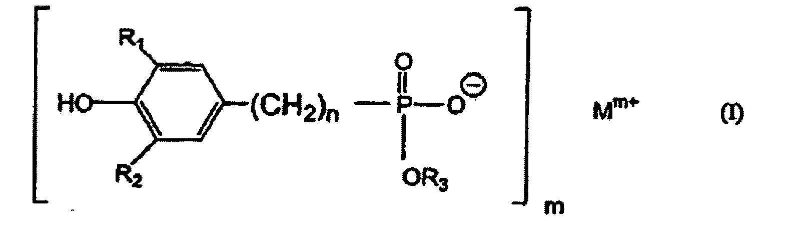 (R₁, R₂ et R₃ sont des groupes hydrocarbonés identiques ou différents contenant 1 à 10 atomes de carbone, n est un nombre entier de 1 à 5, M est un atome de métal alcalin ou un atome de métal alcalino-terreux, et m est 1 quand M est un atome de métal alcalin et 2 quand M est un atome de métal alcalino-terreux).
